# EUROPÄISCHE PATENTANMELDUNG

(11) **EP 4 270 269 A1**
(43) Veröffentlichungstag der Anmeldung: **01.11.2023**
(21) Anmeldenummer: 22170609.6
(22) Anmeldetag: 28.04.2022
(51) Int. Cl.: G06N 20/00

(54) **COMPUTER-IMPLEMENTIERTES VERFAHREN UND SYSTEM FÜR DEN BETRIEB EINES TECHNISCHEN GERÄTS MIT EINEM MODELL AUF BASIS FÖDERIERTEN LERNENS**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Computer-implementiertes Verfahren für den Betrieb eines technischen Geräts mit einem Modell auf Basis föderierten Lernens, umfassend folgende Schritte:
a) Erzeugen eines ersten Modells von dem ersten Klienten und zumindest eines zweiten Modells von dem zumindest einen zweiten Klienten,
b) Erfassen und Bereitstellen von Modell-Eigenschaften, Daten-Eigenschaften sowie entsprechende Metriken des ersten Klienten und des zumindest einen zweiten Klienten und deren verbundener technische Geräte an den Server,
c) Trainieren des ersten Modells von dem ersten Klienten und des zumindest einen zweiten Modells von dem zumindest einen zweiten Klienten, und Übermitteln an den Server,
d) Erzeugen und Trainieren eines globalen Modells, und Bereitstellen des globalen Modells an den ersten und den zumindest einen zweiten Klienten,
e) Ermitteln einer Korrelations-Matrix für das globale Modell mithilfe der Modell-Eigenschaften, der Daten-Eigenschaften sowie entsprechende Metriken des ersten und des zumindest einen zweiten Klienten und deren verbundenen technischen Geräte durch Anwendung einer Korrelationsfunktion,
f) Bestimmen von zumindest einem Ausreißer-Wert der Korrelations-Matrix, welcher außerhalb eines vordefinierten Wertebereichs liegt, und Ermitteln der zu dem zumindest einen Ausreißer-Wert zugehörigen Ausreißer-Eigenschaft, welche die Korrelation im vorhergehenden Schritt über ein vordefiniertes Maß hinaus beeinflusst sowie den zugehörigen Klienten,
g) Übermitteln der im vorhergehenden Schritt ermittelten Ausreißer-Eigenschaft an den zugehörigen Klienten.

## Beschreibung

Die Erfindung betrifft ein computer-implementiertes Verfahren und ein System für den Betrieb eines technischen Geräts mit einem Modell auf Basis föderierten Lernens. Das Verfahren ist auf einem System mit einem Server und einem ersten Klienten sowie zumindest einem zweiten Klienten, welche Klienten jeweils mit einem technischen Gerät verbunden sind, ausführbar.

Ferner betrifft die Erfindung ein Computerprogramm, einen elektronisch lesbaren Datenträger und ein Datenträgersignal.

Maschinelles Lernen (engl. "machine learning", kurz ML) ist in der Industrie weit verbreitet. Dabei benötigen Maschinen an verschiedenen Produktionsstandorten häufig dieselben ML-Modelle, um ähnliche Aufgaben auszuführen, wie für eine intelligente Zustandsüberwachung oder eine vorausschauende Wartung.

Während Produktionsstandorte ihre Daten teilen könnten, um die Leistung des ML-Modells zu verbessern, verhindern Datenschutzbeschränkungen dies häufig. Es kann jedoch föderiertes Lernen (engl. "federated learning", kurz FL) angewendet werden, um Klienten den Austausch von Wissen zu ermöglichen, ohne die zugrunde liegenden Trainingsdaten zu teilen.

In einem FL-System registrieren sich Klienten bei einem zentralen Server, um zusammenzuarbeiten und ein gemeinsames Modell zu erstellen. Ein typischer FL-Prozess umfasst mehrere Kommunikationsrunden, in denen Clients damit beginnen, ein Modell mit ihren Daten zu trainieren und Modellgewichte an den Server zurückzusenden. Dann aggregiert der FL-Server alle empfangenen Modelle von den Clients und wendet einen FL-Algorithmus (wie "Federated Averaging") an. Nachdem die Kunden dieses aktualisierte Modell erhalten haben, setzen sie ihr Training darauf fort.

Klienten validieren ihr lokales Modell häufig anhand eines Testdatensatzes und senden die resultierenden Metriken, wie beispielsweise Genauigkeit, Verlust oder Latenz an den zentralen Server. Diese Metriken können dann visualisiert werden, insbesondere mithilfe von Boxplots, um Ausreißer von Klienten zu erkennen, wie beispielsweise Klienten mit geringer Genauigkeit oder hohem Verlust. Die zugrunde liegende Ursache, warum einige Klienten über- oder unterdurchschnittlich abschneiden, ist jedoch nicht direkt ersichtlich und könnte auf andere Gründe zurückgeführt werden.

Im Stand der Technik ist es bekannt, durch eine manuelle Inspektion die Modelle der Klienten zu analysieren. Da jedoch keine weiteren Informationen darüber verfügbar sind, warum einige Klienten unterdurchschnittlich funktionieren, wäre eine manuelle und Vor-Ort-Inspektion der Clients erforderlich, um zu überprüfen, ob beispielsweise Sensoren falsch konfiguriert wurden oder ob sich die Betriebsumgebung im Laufe der Zeit geändert hat, was jedoch sehr aufwändig ist und keine zeitnahe Untersuchung erlaubt.

Ferner ist es bekannt, beispielsweise einzelne Kunden mit geringer Genauigkeit aus dem föderierten Lernen einfach auszuschließen, um das gesamte Modell zu verbessern. Unterdurchschnittliche Kunden könnten dadurch jedoch auch von zukünftigen Kommunikationsrunden ausgeschlossen werden. Dies würde jedoch auch negativ zur Entwicklung des globalen Modells beitragen, da kundenspezifische Trainingsinformationen verloren gehen.

Außerdem ist es bekannt, in einem globalen Modell schlechtere Modelle einfach zu akzeptieren. Das FL-System könnte auch leistungsschwache Klienten ignorieren und ihre Modellparameter akzeptieren, was zu einer schlechteren globalen Modellleistung führt.

Insgesamt liefern die bekannten Verfahren noch keine ausreichende Lösung, um Klienten in einem föderierten System zu berücksichtigen, um ein dynamisches und gleichzeitig effektives System zu erhalten.

Es ist daher Aufgabe der Erfindung diesen Nachteil zu überwinden und eine entsprechende Lösung bereitzustellen.

Die erfindungsgemäße Aufgabe wird durch ein Verfahren eingangs genannter Art gelöst, umfassend folgende Schritte:
a) Erzeugen eines ersten Modells von dem ersten Klienten und zumindest eines zweiten Modells von dem zumindest einen zweiten Klienten, wobei die Modelle jeweils auf künstlicher Intelligenz basieren,
b) Erfassen und Bereitstellen von Modell-Eigenschaften, welche das Modell in ihren Eigenschaften oder Parametern beschreiben, und Daten-Eigenschaften, welche die Daten des Modells beschrieben, sowie entsprechende Metriken, welche die jeweiligen Eigenschaften definieren, des ersten Klienten und des zumindest einen zweiten Klienten und deren verbundener technische Geräte (D1-D3) an den Server,
c) Trainieren des ersten Modells von dem ersten Klienten und des zumindest einen zweiten Modells von dem zumindest einen zweiten Klienten, und Übermitteln an den Server,
d) Erzeugen und Trainieren eines globalen Modells mithilfe des ersten und des zumindest einen zweiten Modells durch den Server, und Bereitstellen des globalen Modells an den ersten und den zumindest einen zweiten Klienten,
e) Ermitteln einer Korrelations-Matrix für das globale Modell mithilfe der Modell-Eigenschaften, der Daten-Eigenschaften sowie der entsprechenden Metriken des ersten und des zumindest einen zweiten Klienten und deren verbundenen technischen Geräte durch Anwendung einer Korrelationsfunktion durch den Server,
f) Bestimmen von zumindest einem Ausreißer-Wert der Korrelations-Matrix, welcher außerhalb eines vordefinierten Wertebereichs liegt, und Ermitteln der zu dem zumindest einen Ausreißer-Wert zugehörigen Ausreißer-Eigenschaft, welche die Korrelation im vorhergehenden Schritt über ein vordefiniertes Maß hinaus beeinflusst sowie den zugehörigen Klienten, durch den Server,
g) Übermitteln der im vorhergehenden Schritt ermittelten Ausreißer-Eigenschaft an den zugehörigen Klienten.

Der Server und die Klienten umfassen jeweils einen Prozessor mit einem Speicher und sind miteinander durch ein Kommunikationsmittel zum Datenaustausch verbunden.

Die Klienten können ferner Sensor-Mittel zur Datenerfassung von Betriebseigenschaften in Form von Sensor-Daten, wie Temperatur, Druck, Strom, Spannung, etc. des jeweilig verbundenen technischen Geräts aufweisen, welche auch dazu eingerichtet sind, aus den Sensor-Daten statistische Daten zu berechnen und als verarbeitete Daten oder Roh-Daten als Mess-Daten bereitzustellen.

Ein jeweiliger Klient kann aus den Mess-Daten zusätzlich Analyse-Daten abstrahieren, beispielsweise durch Verknüpfung mehrerer Mess-Daten oder eine zeitliche statistische Analyse wie durch eine Prädiktion einer oder mehrerer Mess-Daten.

Unter Modell-Eigenschaften können beispielsweise die Größe eines Sensor-Datensatzes, eine statistische Verteilung von Eingangsdaten oder Zieldaten, oder Hyperparameter verstanden werden, welche automatisch durch Analyse des Modells durch den jeweiligen Klienten oder manuell durch einen Bediener festgelegt und bereitgestellt werden können.

Die Korrelations-Matrix stellt den Zusammenhang zwischen Modell-Eigenschaften, Daten-Eigenschaften mithilfe von für das System vorab festgelegten Metriken und einzelnen oder mehreren Klienten her.

Es ist klar, dass statt einer Matrix auch andere geeignete Datenstruktur verwendet werden kann. Eine Matrix bietet jedoch eine besonders günstige Weise, mit welcher verschiedene Eigenschaften und deren Beziehungen in einem Speicher eines Computers gespeichert werden können, insbesondere wenn deren Berechnung auf einem Computer parallelisierbar sein soll, was insbesondere in einer Cloud oder auf einem Server erwünscht ist.

Im vorliegenden Zusammenhang ist mit einem Server auch eine Cloud-Infrastruktur gemeint, welche beispielsweise über ein WAN verbunden ist. Ferner kann mit dem Server auch ein Computer-Cluster gemeint sein, mit welchem auf effiziente parallele Weise die Matrix berechnet wird, wobei der Cluster auch in Form eines Edge-Geräts gebildet sein kann, welcher mit dem Server verbunden ist und mit dem Server eine logische, jedoch physikalisch getrennte Einheit bildet.

Somit werden im Schritt b) für die Modell-Eigenschaften Modell-Metriken und für die Daten-Eigenschaften Daten-Metriken bereitgestellt, welche im Schritt e) entsprechend berücksichtigt werden.

Die Modell-Eigenschaften beschreiben das ML-Modell selbst, beziehungsweise deren eingebundenen Parameter, also bilden eine virtuelle Repräsentation des technischen Geräts, also beispielsweise einen "digitalen Zwilling" des Geräts, welcher für eine Simulation oder eine vorausschauende Betriebszustands-Prognose eingesetzt werden kann.

Die Daten-Eigenschaften beschreiben die Art der Daten des Modells beziehungsweise deren Struktur oder die Definition eines Parameters im Modell.

Die Modell-Metriken und Daten-Metriken definieren Erfassungskriterien beziehungsweise die Definitionen der jeweiligen Eigenschaften, legen also fest, wie die Eigenschaften für das Modell und die Daten ermittelt werden.

Die Metriken legen fest, welche Eigenschaften durch das Modell analysiert und während des Betriebs der Klienten mit deren Geräten überwacht werden sollen, und werden auf die Modell-Eigenschaften angewendet.

Mit anderen Worten verknüpft die Korrelations-Matrix Eigenschaften, nämlich Modell-Eigenschaften - wie beispielsweise Hyper-Parameter - sowie Daten-Eigenschaften - wie eine statistische Verteilung oder die Größe eines Datensatzes - mit einer oder mehreren Leistungs-Metriken durch eine Korrelationsfunktion, um herauszufinden, welche Eigenschaften sich auf welche Leistungs-Metriken auswirken können.

Die Eigenschaften können in Form von Mess-Daten und/oder Analyse-Daten abgebildet sein.

Es kann optional eine Geräte-Gruppe gebildet werden, indem für mehrere Geräte ein Gruppen-Modell gebildet wird, beispielsweise um mehrere, identische Geräte an einem Standort zusammenzufassen. Dazu können beispielsweise Klienten untereinander direkt miteinander kommunizieren und entsprechende Daten für das Gruppen-Modell austauschen. Dadurch kann diese Gruppe einfacher im globalen Modell berücksichtigt werden, was des Rechenaufwand im Server reduziert.

Durch die Erfindung kann erreicht werden, dass ein Klient Informationen darüber erhält, welche Modell-Eigenschaften ungünstigen Einfluss auf das globale Modell haben und der Klient kann dementsprechend darauf reagieren und gegensteuern, beispielsweise die Erfassungsgenauigkeit einer Sensor-Messgröße durch ein entsprechendes Erfassungsmittel zu verbessern, wie durch die Erhöhung der Erfassungsrate oder durch die Anwendung eines größeren Messintervalls.

In einer Weiterbildung der Erfindung ist es vorgesehen, dass die Modell-Eigenschaften Betriebsparameter von den technischen Geräten, mit welchen die jeweiligen Klienten verbunden sind, umfassen.

Dadurch kann auf einfache Weise eine Anomalie beim Betrieb eines technischen Geräts erkannt werden und bei Bedarf eine gezielte entsprechende Gegenmaßnahme gesetzt werden.

In einer Weiterbildung der Erfindung ist es vorgesehen, dass die Modell-Eigenschaften Betriebsparameter der jeweiligen Klienten umfassen.

Dadurch kann auf einfache Weise eine Anomalie beim Betrieb eines Klienten erkannt werden und bei Bedarf eine gezielte entsprechende Gegenmaßnahme gesetzt werden.

Die Analyse kann dahingehend verbessert werden, dass dem Klienten Informationen bereitgestellt werden, welche Parameter oder Eigenschaften den größten Einfluss auf ein globales Modell haben.

Dadurch hat der Klient die Möglichkeit das lokale Modell oder den Betrieb des Klienten und/oder des Geräts zu verbessern.

Durch die Einbeziehung der Informationen, welche Verbesserungsvorschläge des Systems darstellen, kann der Klient weiterhin im System berücksichtigt werden, statt wegen einem schlechten Modell vom föderierten Lernen möglicherweise ausgeschlossen zu werden.

In einer Weiterbildung der Erfindung ist es vorgesehen, dass im Schritt e) das vordefinierte Maß der Maximalwert oder der Mittelwert über die Modell-Eigenschaften ist.

Mit den Modell-Eigenschaften sind die einzelnen Modell-Eigenschaften des entsprechenden Modells eines jeweiligen Klienten gemeint, beispielsweise die Größe eines Datensatzes, eine statistische Verteilung von Eingangsdaten oder Zieldaten, oder andere Hyperparameter des Klienten oder des verbundenen Geräts.

In einer Weiterbildung der Erfindung ist es vorgesehen, dass das Verfahren in den Schritten c) bis g) wiederholt wird und im Schritt e) das vordefinierte Maß dynamisch neu definiert wird, vorzugsweise anhand des zumindest einen Ausreißer-Werts.

Dadurch wird eine dynamische Überwachung von Betriebsparameters möglich, wobei deren einzuhaltenden Grenzwerte je nach Erfordernissen angepasst werden kann.

Die Erfordernisse können automatisch oder manuell durch einen Bediener angepasst werden, beispielswiese die Genauigkeit gesteigert oder die Erfassungsrate erhöht werde, um eine erkannte Anomalie genauer untersuchen zu können.

Die erfindungsgemäße Aufgabe wird auch durch ein System eingangs genannter Art gelöst, wobei das System dazu eingerichtet ist, das erfindungsgemäße Verfahren auszuführen.

Die erfindungsgemäße Aufgabe wird durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird durch ein Datenträgersignal gelöst, welches das erfindungsgemäße Computerprogramm überträgt.

Die Erfindung wird nachfolgend anhand eines in den beigeschlossenen Zeichnungen dargestellten Ausführungsbeispiels näher erläutert. In den Zeichnungen zeigt:
- Fig. 1: ein Ausführungsbeispiel für ein System auf Basis föderierten Lernens,
- Fig. 2: ein Ausführungsbeispiel für das erfindungsgemäße Verfahren als Ablaufdiagramm.

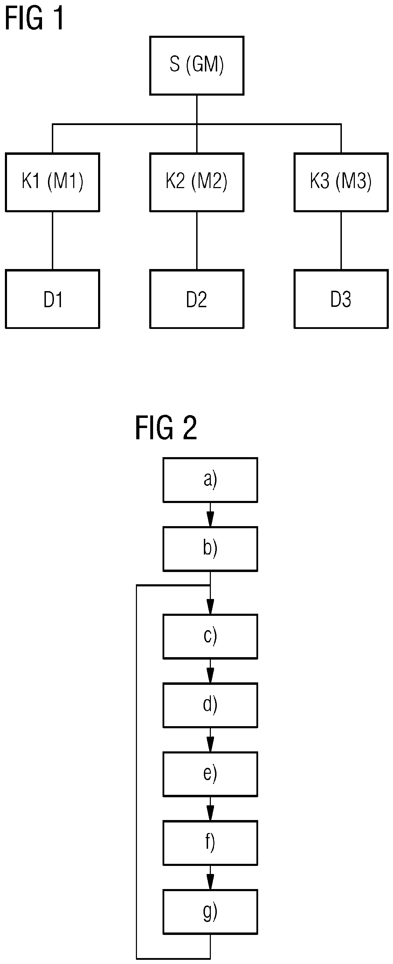

**Fig. 1** zeigt ein System mit einem Server S und drei Klienten K1-K3, welche jeweils mit einem technischen Gerät D1-D3 verbunden sind.

Zwischen den Komponenten des Systems liegen Datenschnittstellen vor, über welche Daten, wie beispielsweise über Eigenschaften von Modellen oder Modelle selbst ausgetauscht werden können.

Das System ist dazu eingerichtet folgendes Verfahren auszuführen, umfassend folgende Schritte:
a) Erzeugen eines ersten Modells M1 von dem ersten Klienten K1 und zwei weitere Modelle M2, M3 von den weiteren Klienten K2, K3, wobei die Modelle M1-M3 jeweils auf künstlicher Intelligenz basieren,
b) Erfassen und Bereitstellen von Modell-Eigenschaften, welche das Modell in ihren Eigenschaften oder Parametern beschreiben, und Daten-Eigenschaften, welche die Daten des Modells beschrieben, sowie entsprechende Metriken, welche die jeweiligen Eigenschaften definieren, des ersten Klienten K1 und der zwei weiteren Klienten K2, K3 und deren verbundener technische Geräte D1-D3 an den Server S,
c) Trainieren des ersten Modells M1 von dem ersten Klienten K1 und der zwei weiteren Modelle M2, M3 von den zwei weiteren Klienten K2, K3, und Übermitteln an den Server S,
d) Erzeugen und Trainieren eines globalen Modells GM mithilfe des ersten und der zwei weiteren Modelle M1-M3 durch den Server S, und Bereitstellen des globalen Modells GM an den ersten und die zwei weiteren Klienten K1-K3,
e) Ermitteln einer Korrelations-Matrix p für das globale Modell GM mithilfe der Modell-Eigenschaften, der Daten-Eigenschaften sowie der entsprechenden Metriken des ersten und der zwei weiteren Klienten K1-K3 und deren verbundenen technischen Geräte D1-D3 durch Anwendung einer Korrelationsfunktion durch den Server S,
f) Bestimmen von zumindest einem Ausreißer-Wert der Korrelations-Matrix p, welcher außerhalb eines vordefinierten Wertebereichs liegt, und Ermitteln der zu dem zumindest einen Ausreißer-Wert zugehörigen Ausreißer-Eigenschaft, welche die Korrelation im vorhergehenden Schritt über ein vordefiniertes Maß hinaus beeinflusst sowie den zugehörigen Klienten K1-K3, durch den Server S,
g) Übermitteln der im vorhergehenden Schritt ermittelten Ausreißer-Eigenschaft an den jeweilig zugehörigen Klienten K1-K3.

Das Verfahren ist in zumindest einem Schritt Computerimplementiert.

Als Modell-Eigenschaften eines Modells M1-M3 können beispielsweise die Größe eines Sensor-Datensatzes, eine statistische Verteilung von Eingangsdaten oder Zieldaten, oder Hyperparameter verstanden werden.

Die Modell-Eigenschaften M1-M3 können für Betriebsparameter von den technischen Geräten D1-D3 mit welchen die jeweiligen Klienten K1-K3 verbunden sind, oder deren Betriebsparameter der jeweiligen Klienten K1-K3 selbst, angewendet werden.

Als Metrik für ein technisches Gerät D1-D3 beziehungsweise das entsprechende Modell M1-M3 kann beispielsweise eine Mess-Genauigkeit, ein Leistungs-Verlust oder eine Latenz bei der Datenübertragung genannt werden.

Tabelle 1 zeigt ein Beispiel für eine Korrelations-Matrix p. Die Werte der Matrix *ρ_{x,y}* bringen Modell-Eigenschaften und m Metriken, sowie die dazugehörigen n Eigenschaften - für Modell und Daten - der einzelnen Klienten miteinander über eine Korrelationsfunktion in Verbindung.

**Tabelle 1: Korrelations-Matrix p**

| *ρ* | Genauigkeit | Verlust | ... | Latenz |
|---|---|---|---|---|
| Größe Datensatz | *ρ*_{1,1} | *ρ*_{1,2} | ... | *ρ*_{1,*m*} |
| Eingangsdaten-Verteilung | *ρ*_{2,1} | *ρ*_{2,2} | ... | *ρ*_{2,*m*} |
| Zieldaten-Verteilung | P3,1 | *ρ*_{3,2} | ... | *P3,m* |
| ... | ... | ... | ... | ... |
| Hyperparameter | *ρ*_{*n*,1} | *ρ*_{*n*,2} | ... | *Pn,m* |

Als Korrelationsfunktion wird beispielsweise eine Kreuzkorrelations-Operation oder vorzugsweise eine Faltung ausgeführt, weil sie leichter zu implementieren ist.

Mithilfe der Korrelationsfunktion kann bestimmt werden, wie groß der Einfluss einer Eigenschaft, welche durch eine Metrik ermittelt wird, auf das Modell eines Klienten ist. Wenn beispielsweise ein vorbestimmter Schwellwert überschritten wird, kann der Klient darüber informiert werden, um entsprechende Gegenmaßnahmen zu Verbesserung der Metrik einzuleiten.

Falls alle Metriken innerhalb der vorgegebenen Wertebereiche liegen, kann jeder Wert zurückgelieferte werden, welcher im Sinne einer Qualitätskontrolle den höchsten Beitrag am globalen Modell gemäß der Korrelationsfunktion liefert. Dies kann beispielsweise jenem Wert entsprechen, welcher mit hoher Wahrscheinlichkeit die Modell-Genauigkeit am stärksten beeinflusst.

Das im Schritt e) vordefinierte Maß kann beispielsweise der Maximalwert oder der Mittelwert über die einzelnen Modell-Eigenschaften des entsprechenden Modells eines jeweiligen Klienten sein.

Das Verfahren kann in den Schritten c) bis g) wiederholt werden, wobei das im Schritt e) vordefinierte Maß dynamisch neu definiert werden kann, vorzugsweise anhand des zumindest einen Ausreißer-Werts.

**Fig. 2** zeigt ein Ausführungsbeispiel für das erfindungsgemäße Verfahren als Ablaufdiagramm.

### Bezugszeichenliste:

- D1-D3: technisches Gerät, z.B. Motor
- GM: globales Modell
- K1-K3: Klient
- M1-M3: Lokalen Modell
- S: Server
- p: Korrelations-Matrix
- m: Anzahl an Metriken
- n: Anzahl an Eigenschaften

## Patentansprüche

1. Computer-implementiertes Verfahren für den Betrieb eines technischen Geräts (D1) mit einem Modell auf Basis föderierten Lernens, welches auf einem System mit einem Server (S) und einem ersten Klienten (K1) sowie zumindest einem zweiten Klienten (K2, K3), welche Klienten (K1-K3) jeweils mit einem technischen Gerät (D1-D3) verbunden sind, ausführbar ist, umfassend folgende Schritte:
a) Erzeugen eines ersten Modells (M1) von dem ersten Klienten (K1) und zumindest eines zweiten Modells (M2, M3) von dem zumindest einen zweiten Klienten (K2, K3), wobei die Modelle (M1-M3) jeweils auf künstlicher Intelligenz basieren,
b) Erfassen und Bereitstellen von Modell-Eigenschaften, welche das Modell in ihren Eigenschaften oder Parametern beschreiben, und Daten-Eigenschaften, welche die Daten des Modells beschrieben, sowie entsprechende Metriken, welche die jeweiligen Eigenschaften definieren, des ersten Klienten (K1) und des zumindest einen zweiten Klienten (K2, K3) und deren verbundener technische Geräte (D1-D3) an den Server (S),
c) Trainieren des ersten Modells (M1) von dem ersten Klienten (K1) und des zumindest einen zweiten Modells (M2, M3) von dem zumindest einen zweiten Klienten (K2, K3), und Übermitteln an den Server (S),
d) Erzeugen und Trainieren eines globalen Modells (GM) mithilfe des ersten und des zumindest einen zweiten Modells (M1-M3) durch den Server (S), und Bereitstellen des globalen Modells (GM) an den ersten und den zumindest einen zweiten Klienten (K1-K3),
e) Ermitteln einer Korrelations-Matrix (p) für das globale Modell (GM) mithilfe der Modell-Eigenschaften, der Daten-Eigenschaften sowie der entsprechenden Metriken des ersten und des zumindest einen zweiten Klienten (K1-K3) und deren verbundenen technischen Geräte (D1-D3) durch Anwendung einer Korrelationsfunktion durch den Server (S),
f) Bestimmen von zumindest einem Ausreißer-Wert der Korrelations-Matrix (p), welcher außerhalb eines vordefinierten Wertebereichs liegt, und Ermitteln der zu dem zumindest einen Ausreißer-Wert zugehörigen Ausreißer-Eigenschaft, welche die Korrelation im vorhergehenden Schritt über ein vordefiniertes Maß hinaus beeinflusst sowie den zugehörigen Klienten (K1-K3), durch den Server (S),
g) Übermitteln der im vorhergehenden Schritt ermittelten Ausreißer-Eigenschaft an den zugehörigen Klienten (K1-K3) .

2. Verfahren nach dem vorhergehenden Anspruch, wobei die Modell-Eigenschaften Betriebsparameter von den technischen Geräten (D1-D3), mit welchen die jeweiligen Klienten (K1-K3) verbunden sind, umfassen.

3. Verfahren nach einem der vorhergehenden Ansprüche, wobei die Modell-Eigenschaften Betriebsparameter der jeweiligen Klienten (K1-K3) umfassen.

4. Verfahren nach einem der vorhergehenden Ansprüche, wobei im Schritt e) das vordefinierte Maß der Maximalwert oder der Mittelwert über die Modell-Eigenschaften ist.

5. Verfahren nach einem der vorhergehenden Ansprüche, wobei das Verfahren in den Schritten c) bis g) wiederholt wird und im Schritt e) das vordefinierte Maß dynamisch neu definiert wird, vorzugsweise anhand des zumindest einen Ausreißer-Werts.

6. System für den Betrieb eines technischen Geräts (D1-D3) mit einem Modell (M1-M3) auf Basis föderierten Lernens, umfassend einen Server (S) und einem ersten Klienten (K1) sowie zumindest einem zweiten Klienten (K2, K3), welche Klienten (K1-K3) jeweils mit einem technischen Gerät (D1-D3) verbunden sind, und das System dazu eingerichtet ist, das Verfahren nach einem der vorhergehenden Ansprüche auszuführen.

7. System für föderiertes Lernen, welches auf einem System mit einem Server (S) und einem ersten Klienten (K1) sowie zumindest einem zweiten Klienten (K2, K3), welche Klienten (K1-K3) jeweils mit einem technischen Gerät (D1-D3) verbunden sind, ausführbar ist

8. Computerprogramm, umfassend Befehle, welche bei deren Ausführung durch einen Computer diesen veranlassen, das Verfahren nach einem der vorhergehenden Ansprüche auszuführen.

9. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach einem der vorhergehenden Ansprüche durchführen.

10. Datenträgersignal, welches das Computerprogramm nach Anspruch 8 überträgt.
